# EUROPÄISCHE PATENTSCHRIFT

(11) **EP 0 752 332 B1**
(45) Veröffentlichungstag und Bekanntmachung des Hinweises auf die Patenterteilung: **02.05.1997**
(21) Anmeldenummer: 95110207.8
(22) Anmeldetag: 30.06.1995
(51) Int. Cl.: B60G 21/05

(54) **Verbundlenkerhinterachse**
Twist beam rear axle
Essieu arrière à traverse déformable en torsion

(43) Veröffentlichungstag der Anmeldung: 08.01.1997
(73) Patentinhaber: BENTELER AG, D-33104 Paderborn (DE)
(72) Erfinder: Töpker, Dieter Dr., D-33100 Paderborn (DE); Christophliemke, Wigbert, D-33758 Schloss Holte (DE); Linnig, Wolfram, D-33100 Paderborn (DE); Böhmer, Werner, D-34439 Willebadessen (DE)
(74) Vertreter: Bockermann, Rolf, Dipl.-Ing.

(56) Entgegenhaltungen:
- EP-A- 0 229 576
- EP-A- 0 650 860
- DE-B- 2 735 939
- US-A- 2 069 911
- PATENT ABSTRACTS OF JAPAN vol. 017, no. 389 (M-1449), 21.Juli 1993 & JP 05 069713 A (TOYOTA MOTOR CORP), 23.März 1993,

## Beschreibung

Die Erfindung betrifft eine Verbundlenkerhinterachse gemäß den Merkmalen im Oberbegriff des Anspruchs 1.

Durch die EP 0 229 576 B1 ist eine aus einem Rohr hergestellte Verbundlenkerhinterachse bekannt, deren radführenden Längslenker parallel zueinander verlaufen und unverformt rohrförmig sind, wohingegen der die Längslenker verbindende biegesteife, aber torsionsweiche Querträger bis auf die ebenfalls kreisrunden Enden einen L-, V-, T-, U-, X- oder H-förmigen Querschnitt aufweist. Der Einsatz einer derartigen Verbundlenkerhinterachse in der Praxis ist bislang an der geforderten Lebensdauer gescheitert. Ursache für das Nichterreichen der Lebensdauer ist bei U- und V-förmigen Querträgern die hohe Belastung in den Übergangsbereichen zwischen den verformten und den nicht verformten Längenabschnitten, so daß es hier bei Dauerbelastung zu einem vorzeitigen Ausfall kommt. Zwar zeigen X- oder Y-artig verformte Querträger eine höhere Lebensdauer, da deren Schubmittelpunkt mit dem Schwerpunkt des Querträgers zusammenfällt. Nachteilig ist bei diesen Querschnitten jedoch die eingeschränkte Variationsmöglichkeit der Biegesteifigkeit in bezug auf Gewicht und Positionierung des für die Fahreigenschaften verantwortlichen Schubmittelpunkts des Querträgers.

Durch die DE-B-27 35 939 ist ein Achsverbund für Kraftfahrzeuge bekannt, bei welchem zwei rohrförmige Längslenker durch eine V-förmige Querstrebe winkelsteif miteinander verbunden sind. Die Querstrebe ist einlagig gestaltet und besitzt über ihre gesamte Länge den V-förmigen Querschnitt. In den Übergangsbereichen von der Querstrebe auf die Längslenker sind gesondert hergestellte schuhförmige Knotenbleche mit der Querstrebe und den Längslenkern verschweißt. Die Querstrebe besitzt vor den ihrer vertikalen Mittelquerebene zugewandten Stirnseiten der Knotenbleche in ihren Scheitelbereich eingeprägte Sicken.

Der Erfindung liegt ausgehend vom Stand der Technik die Aufgabe zugrunde, die hoch spannungsbelasteten Übergangsbereiche zwischen den verformten und nicht verformten Längenabschnitten des Querträgers einer Verbundlenkerhinterachse so zu gestalten, daß die auftretenden Spannungen über den gesamten Profilbereich gleichmäßig verteilt werden.

Die Lösung dieser Aufgabe besteht nach der Erfindung in den im kennzeichnenden Teil des Anspruchs 1 aufgeführten Merkmalen.

Danach werden nunmehr beim Wechsel von dem mittleren U-förmigen Längenbereich des Querträgers auf die angrenzenden Übergangsabschnitte, in denen der U-förmige Querschnitt kontinuierlich auf einen kreisrunden rohrförmigen Querschnitt endseitig des Querträgers übergeht, gezielt Einprägungen geschaffen, deren Form, Lage und Tiefe von dem Durchmesser und der Wanddicke des kreisrunden rohrförmigen Ausgangsquerschnitts, von der freien Torsionslänge des mittleren U-förmigen Längenbereichs sowie von der vorgegebenen Torsionsrate abhängig sind. Aufgrund dieser Einprägungen werden jetzt die während der Fahrt eines Personenkraftwagens auftretenden Spannungen so gezielt zerstreut, daß die kritischen Spannungen nicht mehr in einer Ebene wirken und zu einem Ausfall führen können. Desweiteren wird durch die Einprägungen eine durch die eingeleiteten Lasten verursachte Relativverlagerung der aneinander liegenden Wandabschnitte im U-förmigen Querschnitt verhindert, ohne daß ein Zusatzwerkstoff notwendig ist. Demzufolge werden auch die Spannungen, hervorgerufen durch eine Verschiebung der aneinander liegenden Wände im Übergangsbereich von dem U-förmigen Querschnitt auf den kreisrunden rohrförmigen Querschnitt deutlich reduziert. Das Ergebnis ist eine hohe Lebensdauer der gesamten Verbundlenkerhinterachse.

Der Querträger kann ein einstückiger Bestandteil der Verbundlenkerhinterachse oder mit den getrennt hergestellten radführenden Längslenkern durch Schweißung verbunden sein. Hierbei wirkt sich die Erfindung insbesondere dann besonders positiv aus, wenn die Längslenker leicht V-förmig zueinander gestellt sind, so daß die Verbundlenkerhinterachse in der Draufsicht eine etwa trapezförmige Konfiguration besitzt.

Eine bevorzugte Ausführungsform der Erfindung wird in den Merkmalen des Anspruchs 2 erblickt. Danach erstrecken sich die Einprägungen in Querrichtung des Querträgers. Sie besitzen im Längsschnitt gesehen eine sichelartige Konfiguration mit einer größten Tiefe in der den Scheitel des U-förmigen Längenbereichs schneidenden horizontalen Mittellängsebene, wohingegen die Enden der Einprägungen in die inneren oder äußeren Seitenflächen der Schenkel des U-förmigen Längenbereichs auslaufen.

Grundsätzlich ist an jedem Ende des U-förmigen Längenbereichs eine Einprägung vorgesehen. Es können aber auch zwei oder mehrere Einprägungen vorhanden sein. In diesem Fall würden die Einprägungen dann in den Übergangsabschnitten zwischen dem U-förmigen Längenbereich und den kreisrunden Enden liegen.

Eine weitere vorteilhafte Ausführungsform kennzeichnen die Merkmale des Anspruchs 3. Hierbei erstrecken sich die Einprägungen in Längsrichtung des Querträgers, und zwar bevorzugt entlang des Scheitels des bogenförmigen Stegs zwischen den Schenkeln. Diese Einprägungen sind demnach etwa wannenartig gestaltet. Mindestens eine Einprägung ist an jedem Ende des U-förmigen Längenbereichs vorgesehen. Gegebenenfalls können auch zwei oder mehrere Einprägungen endseitig des U-förmigen Längenbereichs angeordnet sein.

Desweiteren erlaubt es die Erfindung, sich in Längsrichtung und in Querrichtung erstreckende Einprägungen gemeinsam vorzusehen.

Die Erfindung ist nachfolgend anhand von in den Zeichnungen dargestellten Ausführungsbeispielen näher erläutert. Es zeigen:
- Figur 1: in der Draufsicht einen Querträger für eine Verbundlenkerhinterachse;
- Figuren 2 bis 5: diverse Querschnitte durch den Querträger der Figur 1 entlang den Linien II-II, III-III, IV-IV und V-V;
- Figur 6: in der Draufsicht eine weitere Ausführungsform eines Querträgers für eine Verbundlenkerhinterachse;
- Figuren 7 bis 10: diverse Querschnitte durch den Querträger der Figur 6 entlang den Linien VII-VII, VIII-VIII, IX-IX und X-X;
- Figur 11: in der Draufsicht eine dritte Ausführungsform eines Querträgers für eine Verbundlenkerhinterachse;
- Figuren 12 und 13: Stirnansichten auf den Querträger der Figur 11 gemäß den Pfeilen XII und XIII;
- Figuren 14 bis 17: diverse Querschnitte durch den Querträger der Figur 11 entlang den Linien XIV-XIV, XV-XV, XVI-XVI und XVII-XVII;
- Figur 18: in der Draufsicht eine vierte Ausführungsform eines Querträgers für eine Verbundlenkerhinterachse;
- Figuren 19 und 20: Stirnansichten auf den Querträger der Figur 18 gemäß den Pfeilen XIX sowie XX und
- Figuren 21 bis 24: diverse Querschnitte durch den Querträger der Figur 18 entlang den Linien XXI-XXI, XXII-XXII, XXIII-XXIII und XXIV-XXIV.

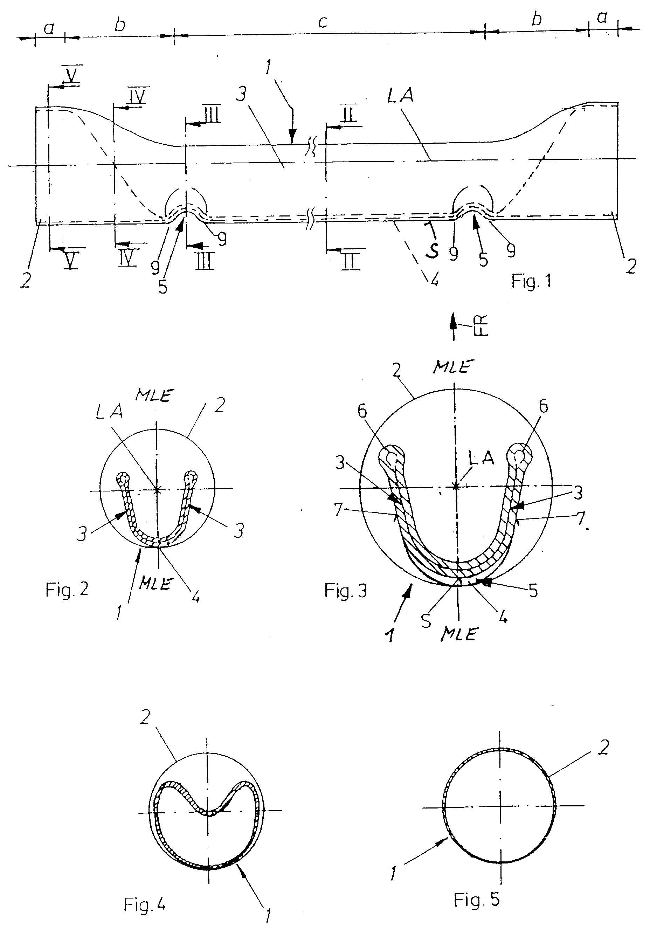

In den Figuren 1, 6, 11 und 18 ist mit jeweils 1, 1a, 1b und 1c ein Querträger für eine Verbundlenkerhinterachse eines Personenkraftwagens bezeichnet.

Jeder Querträger 1, 1a, 1b, 1c ist aus einem ursprünglich kreisrunden Rohr hergestellt, dessen Querschnitt an den Enden 2 der Querträger 1, 1a-1c in den Längenabschnitten a aufrechterhalten ist. Hierzu wird auf die Figuren 5, 10, 17 und 24 verwiesen.

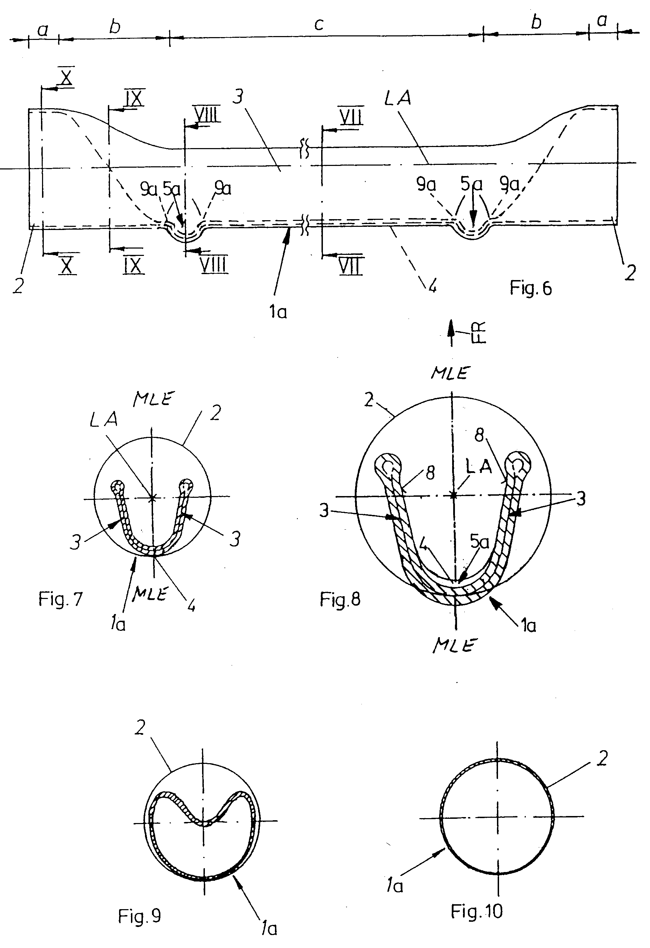

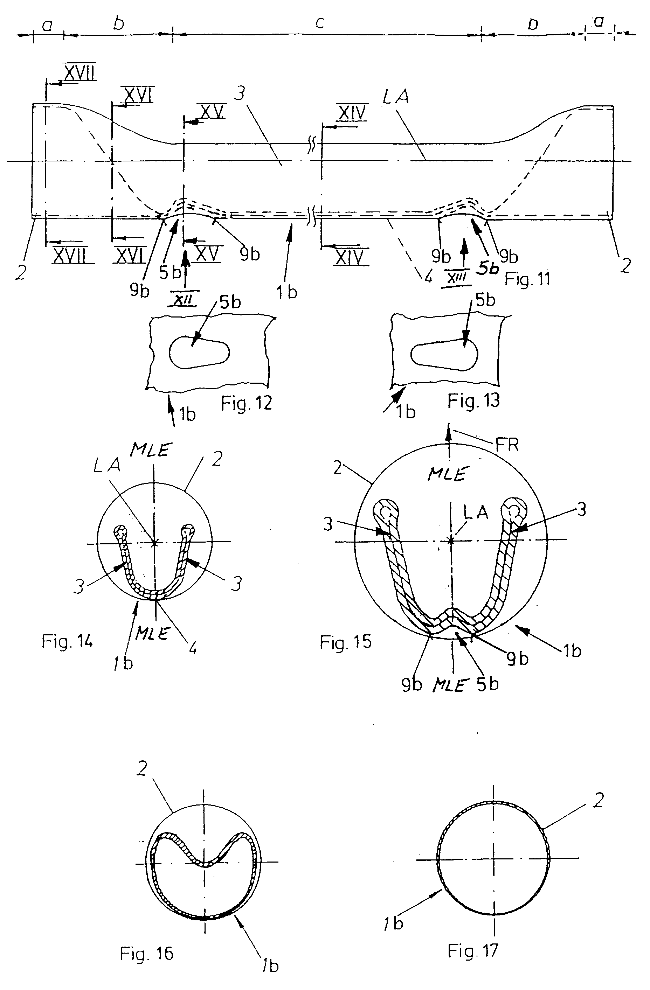

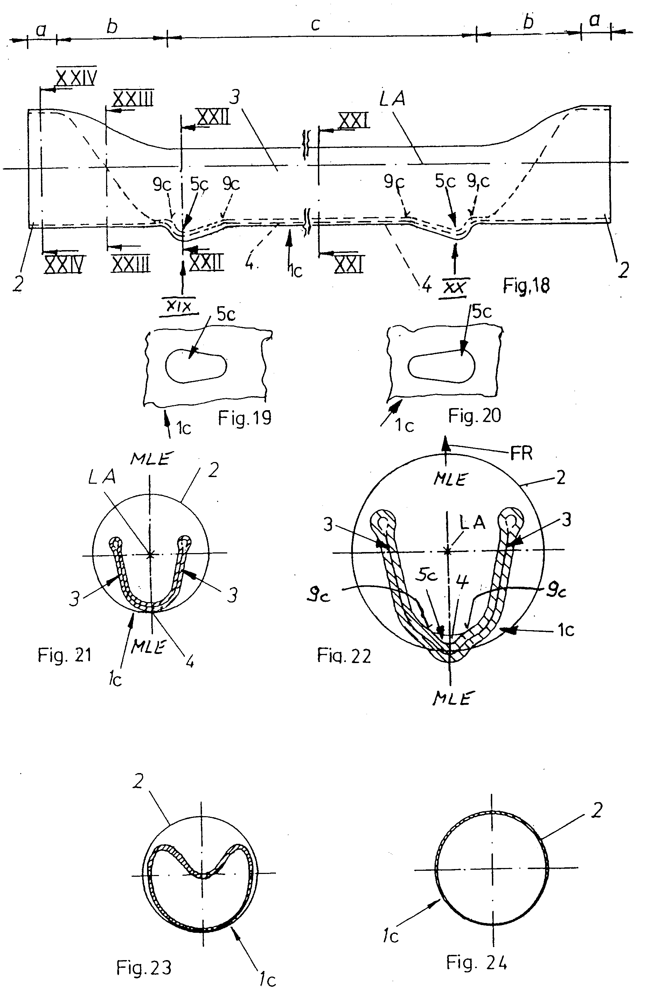

Dieser kreisrunde Querschnitt geht in den Übergangsabschnitten b durch spanlose Umformung kontinuierlich in einen U-förmigen doppelwandigen Querschnitt über, der sich über den mittleren Längenbereich c der Querträger 1, 1a-1c erstreckt. Der kontinuierliche Übergang vom kreisrunden Querschnitt auf den U-förmigen Querschnitt ist bei dem Querträger 1 anhand der Figuren 2 bis 5, bei dem Querträger 1a der Figur 6 anhand der Figuren 7 bis 10, bei dem Querträger 1b der Figur 11 anhand der Figuren 14 bis 17 und bei dem Querträger 1c der Figur 18 anhand der Figuren 21 bis 24 erkennbar.

Die Querträger 1, 1a-1c der Figuren 1, 6, 11 und 18 sind jeweils in der Draufsicht, das heißt in der Einbaulage im Personenkraftwagen dargestellt. Folglich erstrecken sich die Schenkel 3 des mittleren U-förmigen Längenbereichs c (Figuren 2, 3, 7, 8, 14, 15, 21 und 22) vom bogenförmigen Steg 4 aus unter leichter Divergierung bezüglich der durch die Längsachse LA verlaufenden horizontalen Mittellängsebene MLE der Querträger 1, 1a-1c in Fahrtrichtung FR.

Insoweit sind die übereinstimmenden Merkmale der Querträger 1, 1a-1c der Figuren 1, 6, 11 und 18 beschrieben.

Unterschiede bestehen jedoch beim Wechsel der mittleren U-förmigen Längenbereiche c auf die angrenzenden Übergangsabschnitte b, in denen sich der U-förmige Querschnitt (Figuren 2, 7, 14, 21) kontinuierlich zum kreisrunden Querschnitt (Figuren 5, 10, 17, 24) verändert.

Was in diesem Zusammenhang den Querträger 1 der Figuren 1 bis 5 betrifft, so ist dieser endseitig des mittleren U-förmigen Längenbereichs c mit sich in Querrichtung des Querträgers 1 erstreckenden sickenartigen Einprägungen 5 versehen. Die Figur 3 zeigt hierbei, daß die Einprägungen 5 ihre größte Tiefe am in der horizontalen Mittellängsebene MLE liegenden Scheitel S des U-förmigen Längenbereichs c aufweisen. Sie verringern ihre Tiefe in Richtung auf die freien Enden 6 der Schenkel 3, bis sie gleichmäßig in die äußere Oberfläche 7 der Schenkel 3 einlaufen. Im Längsschnitt gesehen haben die Einprägungen 5 mithin eine sichelförmige Konfiguration.

Während bei dem Querträger 1 der Figuren 1 bis 5 die Einprägungen 5 nach innen gerichtet sind, veranschaulichen die Figuren 6 bis 10 einen Querträger 1a mit beim Wechsel von dem U-förmigen Längenbereich c auf die angrenzenden Übergangsabschnitte b nach außen gerichteten, quer verlaufenden Einprägungen 5a. Hier zeigt die Figur 8, daß die Einprägungen 5a ihre größte Tiefe in der horizontalen Mittellängsebene MLE erreichen, sich von hier aus in der Tiefe in Richtung auf die Schenkel 3 verringern und vorsprungslos in die inneren Oberflächen 8 der Schenkel 3 übergehen. Auch hierbei haben die Einprägungen 5a im Längsschnitt eine sichelförmige Konfiguration.

Es ist sowohl bei dem Querträger 1 der Figur 1 als auch bei dem Querträger 1a der Figur 6 deutlich zu erkennen, daß die Ränder 9, 9a der Einprägungen 5, 5a abgerundet sind.

Bei der Ausführungsform eines Querträgers 1b der Figuren 11 bis 17 sind beim Wechsel von dem mittleren U-förmigen Längenbereich c auf die Übergangsabschnitte b sich in Längsrichtung des Querträgers 1b erstreckende nach innen gerichtete Einprägungen 5b vorhanden. Sie erhalten auf diese Weise eine wannenartige Gestaltung mit abgerundeten Rändern 9b, was insbesondere aus den Figuren 11 und 15 zu erkennen ist.

Die in den Figuren 18 bis 24 veranschaulichte Ausführungsform eines Querträgers 1c zeigt nach außen gerichtete Einprägungen 5c beim Wechsel von dem mittleren U-förmigen Längenbereich c auf die angrenzenden Übergangsabschnitte b, welche sich in Längsrichtung des Querträgers 1c erstrecken. Auch diese Einprägungen 5c haben abgerundete Ränder 9c, wie die Figuren 18 und 22 erkennen lassen.

### Bezugszeichenaufstellung

- 1 -: Querträger
1a - Querträger
1b - Querträger
1c - Querträger
- 2 -: Enden v. 1, 1a-1c
- 3 -: Schenkel v. c
- 4 -: Steg v. c
- 5 -: Einprägungen v. 1
5a - Einprägungen v. 1a
5b - Einprägungen v. 1b
5c - Einprägungen v. 1c
- 6 -: Enden v. 3
- 7 -: äußere Oberflächen v. 3
- 8 -: innere Oberflächen v. 3
- 9 -: Ränder v. 5
9a - Ränder v. 5a
9b - Ränder v. 5b
9c - Ränder v. 5c
- a -: Endabschnitte v. 1, 1a-1c
- b -: Übergangsabschnitte v. 1, 1a-1c
- c -: mittlerer Längenbereich v. 1, 1a-1c
- FR -: Fahrtrichtung
- LA -: Längsachse v. 1, 1a-1c
- MLE -: Mittellängsebene v. 1, 1a-1c
- S -: Scheitel

## Patentansprüche

1. Verbundlenkerhinterachse, die einen an den Enden (2) kreisrunden rohrförmigen, im mittleren Längenbereich (c) durch spanlose Umformung jedoch doppelwandigen U-förmigen Querträger (1, 1a-1c) aufweist, wobei die Abschnitte (b) zwischen den kreisrunden Enden (2) und dem mittleren U-förmigen Längenbereich (c) kontinuierlich vom kreisrunden zum U-förmigen Querschnitt übergehen, **dadurch gekennzeichnet**, daß der Querträger (1, 1a-1c) endseitig des mittleren, bezüglich seiner horizontalen Mittellängsebene (MLE) zueinander divergierende Schenkel (3) aufweisenden U-förmigen Längenbereichs (c) an dem bogenförmig ausgebildeten Steg (4) mit nach innen oder nach außen gerichteten, abgerundete Ränder (9, 9a-9c) aufweisenden Einprägungen (5, 5a-5c) versehen ist.

2. Verbundlenkerhinterachse nach Anspruch 1, **dadurch gekennzeichnet**, daß die Einprägungen (5, 5a) sich in Querrichtung des Querträgers (1, 1a) erstrecken.

3. Verbundlenkerhinterachse nach Anspruch 1, **dadurch gekennzeichnet**, daß die Einprägungen (5b, 5c) sich in Längsrichtung des Querträgers (1b, 1c) erstrecken.

## Claims

1. A dead beam back axle comprising a U-shaped cross-member (1, 1a - 1c) which is tubular and circular at the ends (2) but is made double-walled in its central longitudinal zone (C) by non-cutting shaping, the portions (b) between the circular ends (2) and the central U-shaped longitudinal zone (c) merging continuously from a circular to a U-shaped cross-section, characterised in that the cross-member (1, 1a - 1c) is formed with recesses (5, 5a - 5c) having inwardly or outwardly directed rounded edges (9, 9a - 9c) on an arcuate web (4) terminally of the U-shaped central longitudinal zone (c), which has arms (3) which diverge from one another relative to its horizontal central longitudinal plane (MLE).

2. A dead beam back axle according to claim 1, characterised in that the recesses (5, 5a) extend in the transverse direction of the cross-member (1, 1a).

3. A dead beam back axle according to claim 1, characterised in that the recesses (5b, 5c) extend in the longitudinal direction of the cross-member (1b, 1c).

## Revendications

1. Essieu arrière orientable combiné qui présente une traverse (1, 1a-1c) circulaire tubulaire sur les extrémités (2), réalisé dans la zone longitudinale médiane (c) par formage mais en profilé en U à double paroi, les sections (b) entre les extrémités circulaires (2) et la zone longitudinale médiane en forme de U (c) passant de façon continue de la section transversale circulaire à une section transversale en forme de U, caractérisé en ce qu'en extrémité de la zone longitudinale médiane en forme de U (c) la traverse (1, 1a-1c) est munie d'ailes (3) divergentes entre elles par rapport à son plan longitudinal médian horizontal (MLE), zone longitudinale en forme de U sur laquelle est prévue une âme (4) arquée avec des dépressions (5, 5a-5c) présentant des bords arrondis dirigés vers l'intérieur ou vers l'extérieur (9, 9a-9c).

2. Essieu arrière orientable combiné selon la revendication 1, caractérisé en ce que les dépressions (5, 5a) s'étendent dans le sens transversal de la traverse (1, 1a).

3. Essieu arrière orientable combiné selon la revendication 1, caractérisé en ce que les dépressions (5b, 5c) s'étendent dans la direction longitudinale de la traverse (1b, 1c).
